# EUROPÄISCHE PATENTSCHRIFT

(11) **EP 2 443 725 B1**
(45) Veröffentlichungstag und Bekanntmachung des Hinweises auf die Patenterteilung: **10.08.2016**
(21) Anmeldenummer: 10737479.5
(22) Anmeldetag: 14.06.2010
(51) Int. Cl.: H02K 9/14, H02K 5/20

(54) **LÜFTERANORDNUNG UND ELEKTRISCHE MASCHINE, INSBESONDERE ELEKTROMOTOR**
BLOWER ARRANGEMENT AND ELECTRIC MACHINE, PARTICULARLY ELECTRIC MOTOR
ENSEMBLE VENTILATEUR ET MACHINE ÉLECTRIQUE, EN PARTICULIER MOTEUR ÉLECTRIQUE

(30) Priorität: 17.06.2009 DE 102009025657
(43) Veröffentlichungstag der Anmeldung: 25.04.2012
(73) Patentinhaber: SEW-EURODRIVE GmbH & Co. KG, 76646 Bruchsal (DE)
(72) Erfinder: KOKER, Torsten, 76297 Stutensee (DE)
(86) Internationale Anmeldenummer: PCT/EP2010/003538
(87) Internationale Veröffentlichungsnummer: WO 2010/145785

(56) Entgegenhaltungen:
- WO-A2-2009/012972
- DE-A1- 2 415 744
- DE-A1- 2 557 620
- DE-A1- 3 427 565
- DE-A1- 10 361 748
- DE-A1- 19 549 204
- FR-A1- 2 667 460
- JP-A- 55 160 952
- US-A- 3 893 817
- US-A- 5 177 385

## Beschreibung

Die Erfindung betrifft eine Lüfteranordnung und eine elektrische Maschine, insbesondere einen Elektromotor.

Es ist bekannt, Elektromotoren mit Lüfter auszustatten, die auf der Rotorwelle drehfest angeordnet sind.

Aus der DE 10 2006 057 203 A1 ist eine elektrische Maschine mit einem auf deren Rotor angeordneten Radiallüfter bekannt.

Aus der Figur 3 der DE 101 11 292 A1 ist zwischen der Lüfterhaube eines Lüfters und dem Gehäuse eine Spaltdichtung bekannt.

Aus der Figur 3 der DE 101 55 224 A1 ist zwischen der Lüfterhaube eines Lüfters und dem Gehäuse eine Spaltdichtung bekannt.

Aus der Figur 2 der DE 2 557 620 A1 ist zwischen der Lüfterhaube eines Lüfters und dem Gehäuse eine Spaltdichtung bekannt.

**Aus der** DE 195 49 204 A1 **ist eine elektrische Maschine gezeigt, bei der ein Lüfter vorgesehen ist.**

**Aus der** JP 55 160952 A **ist eine von einem extern angebrachten Lüfter gekühlte Elektromaschine gezeigt.**

**Aus der** DE 103 61 748 A1 **ist ein Kompaktantrieb gezeigt, der einen Lüfter aufweist, dessen Luftstrom an einer Luftdurchtrittsblende vorbeistreicht.**

**Aus der** WO 2009/012972 A2 **ist als nächstliegender Stand der Technik ein Umrichtermotor mit Lüfterhaube bekannt.**

Der Erfindung liegt daher die Aufgabe zugrunde, eine Lüfteranordnung und eine elektrische Maschine weiterzubilden, insbesondere mit hoher Standzeit auch bei Krafteinwirkungen.

Erfindungsgemäß wird die Aufgabe bei der Lüfteranordnung nach den in Anspruch 1 und bei dem Elektromotor nach den in Anspruch 11 angegebenen Merkmalen gelöst.

Wichtige Merkmale bei der Lüfteranordnung, insbesondere für eine elektrische Maschine, insbesondere Elektromotor, sind, dass sie einen an einem Teil drehbar gelagerten Lüfter umfasst,
wobei das Teil mit einem Gehäuseteil verbunden, insbesondere fest verbunden, oder einstückig mit diesem ausgebildet ist,
wobei eine Lüfterhaube am Gehäuseteil befestigt ist,
**wobei** zwischen Lüfter und Lüfterhaube eine berührungslose Dichtung, insbesondere mittels eines Luftspaltes, insbesondere Spaltdichtung, vorgesehen ist, wobei die Lüfterhaube eine zum Lüfter hin gewandte Dichtkante aufweist,
wobei die Dichtkante bei beliebig gerichteter, betragsmäßig die Bruchkraft unterschreitender Krafteinwirkung auf die am Gehäuseteil befestigte Lüfterhaube einen nicht-verschwindenden Abstand zur Einhüllenden des Lüfters aufweist,
insbesondere wobei die Krafteinwirkung nur eine elastische und/oder plastische Verformung der Lüfterhaube bewirkt,
insbesondere wobei die beliebige elastische Verformung eine beliebig gerichtete Verformung ohne Überschreiten der Bruchgrenze mit oder ohne plastischen Verformungsanteil,
insbesondere wobei die Einhüllende des Lüfters der vom Lüfter bei dessen Drehbewegung ausgefüllte Raumbereich ist,
insbesondere wobei mittels des nicht-verschwindenden Abstands thermische, schwingungsbedingte und/oder fertigungsbedingte Abstandsveränderungen nicht zur Kollision mit dem Lüfter führen, im vorgesehenen Betrieb der Lüfteranordnung.

Von Vorteil ist dabei, dass bei elastischer Auslenkung in beliebiger Richtung zu keiner Berührung zwischen Lüfterhaube und Lüfter kommt, solange die Auslenkung elastisch bleibt, also nicht anelastisch wird. Es ist sogar ein Restabstand einhaltbar, der thermische und weitere Toleranzen aufnimmt und somit eine Kollision vermeidbar macht.

Vorzugsweise lässt sich die Dichtkante in Richtung zum Lüfter schlechter elastisch auslenken als quer zur Oberfläche der Einhüllenden des Lüfters. Dabei ist die Einhüllende der für die Drehung des Lüfters in Anspruch genommene Raumbereich.

Der Lüfter ist dabei verwendbar zum Bewegen eines beliebigen Mediums, wie Luft, Gas oder sogar Flüssigkeiten. Vorteiligerweise ist mittels des Lüfters ein hoher Wirkungsgrad der eingesetzten Energie zum Drehbewegen des Lüfters erreichbar.

Statt der beliebig gerichteten Kraft ist auch ein eingeschränkter Richtungsbereich für die Krafteinwirkung um die Lüfterachse herum vorteilhaft, wobei ein Winkel von weniger als 45° oder sogar weniger als 20° zur Lüfterachse eingeschlossen sein darf.

**Erfindungsgemäß** ist die Elastizität der befestigten Lüfterhaube in Tangentialrichtung größer als in Normalenrichtung, wobei die Tangentialrichtung in der Tangentialebene der Einhüllenden an einem Oberflächenpunkt der Einhüllenden enthalten ist und/oder parallel zu dieser ausgerichtet ist, der zur Dichtkante den geringsten Abstand aufweist. Von Vorteil ist dabei, dass Kräfte auf die Lüfterhaube den Lüfter zwar elastisch auslenken können, aber hauptsächlich nur quer zum Lüfter und nicht zum Lüfter hin. Somit ist die Kollision vermeidbar.

Bei einer vorteilhaften Ausgestaltung liegt die Verbindunglinie zwischen Auflagepunkt und Dichtkante in Normalenrichtung oder schließt zumindest einen Winkel von weniger als 45°, insbesondere weniger als 20°, mit ihr ein. Von Vorteil ist dabei, dass Die Dichtkante quasi an einem Drehpunkt gehalten ist, so dass die Auslenkung in im Wesentlichen Tangentialrichtung erfolgt. Abweichungen von bis zu 20° beeinflussen nur geringfügig. Auch Abweichungen bis 45° sind noch vorteilhaft zulässig.

Bei einer vorteilhaften Ausgestaltung ist der Lüfter ein Radiallüfter, ein Diagonallüfter oder ein Axiallüfter. Von Vorteil ist dabei, dass die Erfindung bei solchen Lüftern anwendbar ist, da dort eine Spaltdichtung zwischen Lüfter und Lüfterhaube vorsehbar ist.

Bei einer vorteilhaften Ausgestaltung weist die Lüfterhaube ein Lüfterhaubengitter als Einlass für axial einströmende Luft auf,
insbesondere wobei das Lüfterhaubengitter kreisförmig begrenzt ist. Von Vorteil ist dabei, dass die angesaugte Luft mit wenig Turbulenz bewegbar ist und der Schutz für Menschen in der Nähe des Lüfters gewährleistbar ist.

Bei einer vorteilhaften Ausgestaltung wird die radial aus dem Lüfter austretende Luftströmung an der Innenseite der Lüfterhaube in zwei axial entgegengesetzt gerichtete Luftströmungen aufgetrennt, wobei die Abdichtung denjenigen Luftstrom, welcher axial entgegengerichtet strömt zum in das Lüfterhaubengitter eintretenden Luftstrom, abdichtet von diesem durch das Lüfterhaubengitter eingetretenen Luftstrom,

und/oder dass ein schüsselförmiger Luft-Umlenkbereich an der Lüfterhaube ausgebildet ist, der mit einem ebenen Teilbereich der Lüfterhaube verbunden ist, wobei der ebene Teilbereich das Lüfterhaubengitter umrandet. Von Vorteil ist dabei, dass der Lüfter an einen Quadratflansch verbindbar, insbesondere anschraubbar, ist.

Bei einer vorteilhaften Ausgestaltung weist die Lüfterhaube einen ebenen Teilbereich auf, der einen quadratischen Außenumfang aufweist, wobei die Ecken des Quadrats gerundet sind, wobei im ebenen Teilbereich Ausnehmungen zur formschlüssigen Verbindung, insbesondere zur Schraubverbindung, mit dem Gehäuseteil angeordnet sind, insbesondere wobei jede Ausnehmung einen größeren Abstand zum Lüfterhaubengitter aufweist als derjenige Abstand, welcher der geringste Abstand zwischen Außenumfang und Lüftergitter ist. Von Vorteil ist dabei, dass der Zwischenbereich zwischen dem Quadrat des Quadratflansches und dem Kreisförmigen Lüfterhaubenbereich nutzbar ist für die Befestigung der Lüfterhaube am Gehäuseteil.

Bei einer vorteilhaften Ausgestaltung wird derjenige Oberflächenbereich der Lüfterhaube mit dem geringsten Abstand zum Lüfter als Dichtkante bezeichnet. Von Vorteil ist dabei, dass die Dichtkante nicht scharfkantig sondern auch stumpf ausführbar ist.

Wichtige Merkmale der Erfindung bei dem Elektromotor sind, dass er einen Rotor und ein Gehäuse umfasst,
wobei der Rotor im Gehäuse gelagert ist,
wobei am Rotor ein Radiallüfter drehfest verbunden ist, der von einer Lüfterhaube umgeben ist, die am Gehäuse befestigt ist,
wobei die Lüfterhaube ein Lüfterhaubengitter als Einlass für axial einströmende Luft aufweist,
wobei an der Lüfterhaube eine Abdichtung ausgebildet ist, welche die Lüfterhaube zum Radiallüfter hin abdichtet.

Von Vorteil ist dabei, dass der Wirkungsgrad der durch den Kühler bewirkten Kühlung vergrößert ist. Denn die axial einströmende Luft wird vom Radiallüfter in radialer Richtung abgegeben und dann wiederum von der Lüfterhaube in im Wesentlichen axiale Richtung umgelenkt, so dass die Luft am Motorgehäuse entlang strömen kann und diesen kühlt. Ein Rückfluss der vom Radiallüfter radial abgelenkten Luftströmung durch das Lüfterhaubengitter zurück ist somit unterbunden oder zumindest verringert.

Da die Kühlung verbessert ist, ist der Motor insgesamt mit höherer Leistung betreibbar und auch sein Wirkungsgrad verbessert.

Unter Abdichtung ist dabei vorzugsweise eine Erhöhung des Strömungswiderstandes für die rückströmende Strömung zu verstehen. Daher muss die Abdichtung nicht berührend ausgeführt sein sondern es genügt eine Spaltdichtung, also eine Dichtung mittels kleinem Spalt. Die Spaltbreite ist dabei auf die Fertigungstoleranzen, Rundlauf-Abweichungen und Montagetoleranzen des Lüfters und der Lüfterhaube abgestimmt.

Bei einer vorteilhaften Ausgestaltung wird die radial aus dem Lüfter austretende Luftströmung an der Innenseite der Lüfterhaube in zwei axial entgegengesetzt gerichtete Luftströmungen aufgetrennt, wobei die Abdichtung denjenigen Luftstrom, welcher axial entgegengerichtet strömt zum in das Lüfterhaubengitter eintretenden Luftstrom, abdichtet von diesem durch das Lüfterhaubengitter eingetretenen Luftstrom. Von Vorteil ist dabei, dass ein verringerter Rückfluss und somit ein höherer Wirkungsgrad sowie eine verbesserte Kühlung erreichbar ist.

Bei einer vorteilhaften Ausgestaltung nimmt der Innendurchmesser der Lüfterhaube in axialer, zum Motor hin orientierten Richtung monoton zu. Von Vorteil ist dabei, dass ein wirbelarmes Umlenken der radialen Luftströmung in axiale Luftströmung erfolgt. Insbesondere ist also der Strömungswiderstand für die umgelenkte Luft gering und eine Kühlung des Motors mittels dieser Strömung mit hohem Wirkungsgrad ermöglicht.

Bei einer vorteilhaften Ausgestaltung ist die Abdichtung als Verdickung an der Lüfterhaube ausgebildet. Von Vorteil ist dabei, dass die Abdichtung in einfacher Weise realisierbar ist.

Bei einer vorteilhaften Ausgestaltung ist der Abstand zwischen Abdichtung und Lüfter kleiner als 4 Millimeter, insbesondere kleiner als 2 Millimeter oder gar ein Millimeter. Von Vorteil ist dabei, dass keine Berührung und somit auch kein Reibungswiderstand auftritt sondern eine genügend effektive Abdichtung durch Einhalten eines möglichst kleinen Spaltes erreichbar ist. Die Spaltbreite ist abgestimmt auf die Toleranzen des Lüfters, der Lüfterhaube, der Rotorwelle und die montagebedingten Toleranzen. Außerdem sind wärmebedingte Ausdehnungen berücksichtigt. Somit ist eine Berührung sicher vermeidbar.

Bei einer vorteilhaften Ausgestaltung umfasst das Gehäuse ein Mittelstück, an dessen axialen Enden jeweils ein ebenfalls vom Gehäuse umfasstes Lagerschild zur Aufnahme der Lager des Rotors verbunden sind,
wobei die Lüfterhaube an einem der Lagerschilde befestigt ist. Von Vorteil ist dabei, dass die Lüfterhaube in einfacher und stabiler Weise befestigbar ist.

Bei einer vorteilhaften Ausgestaltung ist die Abdichtung einstückig an der Lüfterhaube ausgeformt oder die Abdichtung ist mit der Lüfterhaube fest verbunden. Von Vorteil ist dabei, dass die Lüfterhaube einfach und kostengünstig herstellbar ist, beispielsweise als Kunststoffspritzgussteil oder als Stahlteil.

Bei einer vorteilhaften Ausgestaltung ist die Lüfterhaube als Kunststoff-Spritzgussteil ausgeführt. Von Vorteil ist dabei, dass ein mechanischer Berührschutz einhaltbar ist in kostengünstiger Weise.

Bei einer vorteilhaften Ausgestaltung ist ein derart großer axialer Abstand zwischen Lüfterhaubengitter und Lüfter vorgesehen, dass bei einer elastischen Verformung des Lüfterhaubengitters keine Berührung zum Lüfter entsteht. Von Vorteil ist dabei, dass nur bei inelastischer Verformung eine Berührung nicht ausgeschlossen ist. Wenn also die mechanische Einwirkung von außen auf das Lüfterhaubengitter genügend klein ist, findet keine Berührung statt. Ein bevorzugter Abstand ist beispielsweise größer als 5mm, insbesondere ungefähr 7mm.

Weitere Vorteile ergeben sich aus den Unteransprüchen.

Die Erfindung wird nun anhand von Abbildungen näher erläutert:
In der Figur 1 ist Querschnitt durch einen erfindungsgemäßen Elektromotor mit Lüfter 4 und diesen zumindest teilweise schützende umgebender Lüfterhaube gezeigt.

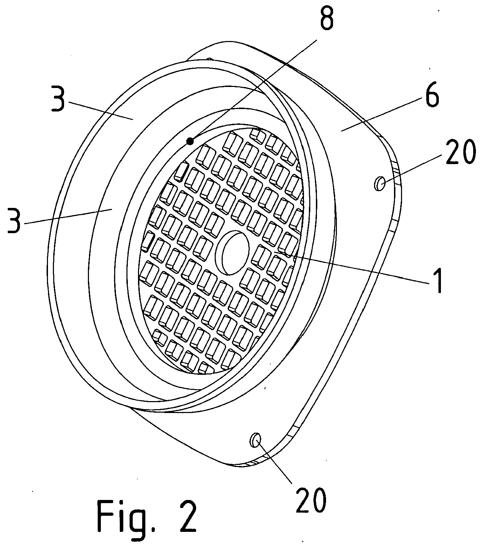

In der Figur 2 ist die Lüfterhaube gezeigt.

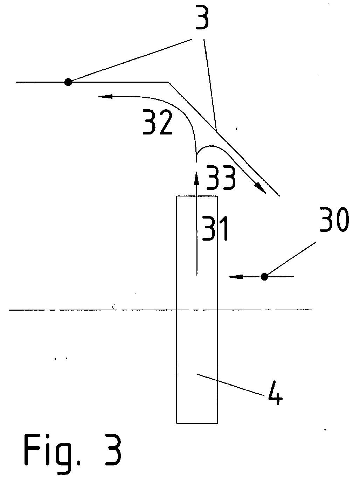

In der Figur 3 ist das Umlenken der Luftströmung idealisiert schematisch dargestellt.

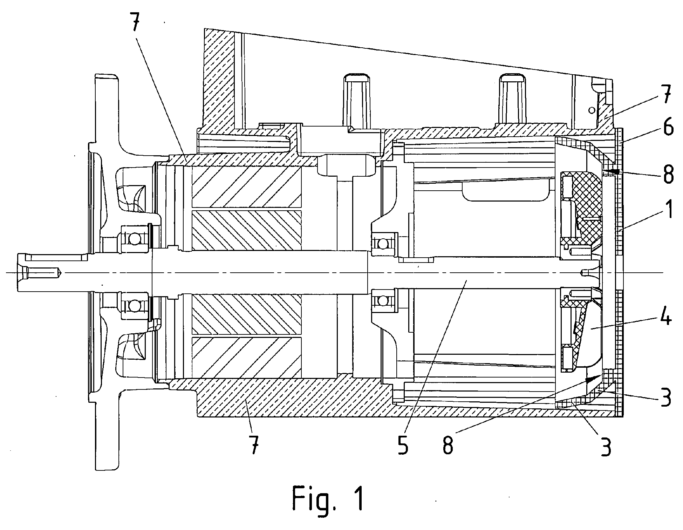

In Figur 1 ist die Rotorwelle 5 über Lager in jeweiligen Lagerschilden gezeigt, die wiederum mit dem Gehäuseteil 7 verbunden sind, mit welchem auch die Lüfterhaube fest verbunden ist.

Mit der Rotorwelle 5 ist der Lüfter 4 drehfest verbunden, so dass die am Lüfter 4 ausgebildeten Lüfterflügel synchron mit der Rotorwelle mitdrehbar sind. Der Lüfter 4 ist als Radiallüfter ausgeführt, so dass der axial durch das Lüfterhaubengitter 1 einströmende Luftstrom in einen im Wesentlichen radialen Luftstrom 31 im Lüfter 4 umgelenkt wird. Dieser wird von einem als Luftleitring ausgeführten Bereich 3 der Lüfterhaube mit entsprechend ausgeformten Luft-Umlenkbereichen 3 und 4, in einen umgelenkten Luftstromanteil 32, der im Wesentlichen in axialer Richtung gerichtet ist, und in einen umgelenkten Luftstromanteil 33 im Wesentlichen in axial entgegengesetzter Richtung umgelenkt. Dabei ist der Motor insgesamt derart gestaltet, dass der Strömungswiderstand für den Luftstromanteil 32 kleiner als für den Luftstromanteil 33 ist. Somit ist der Luftstromanteil 32 größer als der Luftstromanteil 33.

Wenn keine Abdichtung 2 vorgesehen wäre, würde der Luftstromanteil 33 am Lüfterhaubengitter 1 axial austreten und der zur Kühlung des Motors zur Verfügung stehende Luftstromanteil 32 wäre vermindert.

Erfindungsgemäß ist aber die Abdichtung 2 zwischen dem axial einströmenden Luftstrom 30 und dem im Wesentlichen axial entgegengesetzt gerichteten Luftstromanteil 33 vorgesehen. Je besser die Abdichtung 2 wirkt, desto kleiner ist dieser Luftstromanteil 33.

Die Abdichtung 2 ist durch einen möglichst geringen Spalt zwischen einer nach innen, also zum Lüfter 4 hin gerichteten Kante 8 der Lüfterhaube ausgeführt. Somit ist ein nach innen hervorstehender Bereich an der Lüfterhaube ausgeführt, so dass der kürzeste Abstand zwischen dem Lüfterhauben-Bereich der Abdichtung und den Lüfterflügeln des Lüfters 4 möglichst klein wird. Dabei ist allerdings ein kleiner Sicherheitsabstand von beispielsweise 1 mm oder etwas mehr als 2 mm ist notwendig, um toleranzbedingte und montagebedingte Kollisionen zu verhindern.

Der Luftstromanteil 32 wird zur Kühlung des Motors verwendet und daher axial entlang dessen Gehäuse geblasen.

Die Lüfterhaube weist insgesamt Ähnlichkeiten zu einer auf einem Teller angeordneten Tasse auf. Dabei ist der Teller eben ausgeführt und an seinem Außenumfang quadratisch, wobei die Ecken des Quadrats gerundet ausgeführt sind. Der Tellerbereich 6 des Tellers weist außerdem benachbart zu den gerundeten Ecken des Quadrats jeweils eine Ausnehmung 20 auf. An der jeweiligen Ausnehmung 20 ist eine in den Figuren nicht gezeigte Befestigungsschraube angeordnet, mit welcher der Tellerbereich der Lüfterhaube an das Gehäuseteil 7 angeschraubt ist.

Der Tellerbereich 6 des Tellers ist also eben ausgeformt. Mittig im Tellerbereich 6 ist das Lüfterhaubengitter 1 ausgeführt, also der Teller mit Ausnehmungen versehen, so dass die Luft zum Lüfter 4 einströmen kann.

Der tassenförmige Bereich ist durch den Luft-Umlenkbereich 3 gebildet und weist an seiner Innenseite die zum Lüfter 4 gerichtete hervorstehenden Kante 8 auf.

Bei Einwirken einer Axialkraft, also einer in Achsrichtung auf den Tellerbereich 6 der Lüfterhaube wirkenden Kraft, wird die Lüfterhaube elastisch verformt, wobei die Kante 8 in Figur 1 im Wesentlichen auf einem Kreis, dessen Mittelpunkt im Wesentlichen im Auflagepunkt der Lüfterhaube auf dem Gehäuseteil liegt, gelenkt wird. Denn die verformende Wirkung der Kraft ist im Wesentlichen quer zur Verbindungslinie zwischen Kante 8 und zum Auflagepunkt größer als in Richtung der Verbindunglinie. Somit wird die Kante im Wesentlichen auf dem Kreisbogen ausgelenkt.

Hierzu trägt also insbesondere bei, dass die Elastizität quer zur Verbindungslinie größer ist als in Richtung der Verbindungslinie.

Die Anordnung der Kante 8 relativ zum Lüfter 4 ist dabei derart gewählt, dass die Kante 8 den Lüfter 4, insbesondere dessen Lüfterflügel, nicht berührt. Denn der Kreisbogen berührt nicht die Lüfterflügel. Somit ist Kollision mit dem Lüfterflügel des Lüfters 4 verhindert.

**Der Bereich zwischen Kante 8 und Ausnehmung 20, also der Befestigung am Gehäuseteil 7, ist versteift. Insbesondere ist der zwischenliegende Bereich zwischen Kante 8 und Ausnehmung 20 der Lüfterhaube steifer als das Lüfterhaubengitter, das ja viele zueinander eng benachbart vorgesehene Ausnehmungen umfasst und somit eine geringe Steifigkeit aufweist.**

Bei weiteren erfindungsgemäßen Ausführungsbeispielen ist die Kante 8 auch gerundet ausführbar.

### Bezugszeichenliste

- 1: Lüfterhaubengitter
- 2: Abdichtungsspalt
- 3: Luft-Umlenkbereich
- 4: Lüfter mit Lüfterflügeln
- 5: Rotorwelle
- 6: Tellerbereich, eben ausgeformt
- 7: Gehäuseteil, insbesondere Motorgehäuseteil
- 8: Kante der Lüfterhaube, nach innen zum Lüfter hin hervorragend
- 20: Ausnehmung für Befestigungsschrauben
- 30: axialer Luftstrom
- 31: radialer Luftstrom
- 32: umgelenkter Luftstromanteil
- 33: umgelenkter Luftstromanteil

## Patentansprüche

1. Lüfteranordnung für einen Elektromotor, umfassend einen an einem Teil drehbar gelagerten Lüfter (4),
wobei das Teil mit einem Gehäuseteil (7) verbunden oder einstückig mit diesem ausgebildet ist,
wobei eine Lüfterhaube am Gehäuseteil (7) befestigt ist oder mit diesem einstückig ausgebildet ist,
**wobei** zwischen Lüfter (4) und Lüfterhaube eine berührungslose Dichtung mittels eines Luftspaltes vorgesehen ist, wobei die Lüfterhaube eine zum Lüfter (4) hin gewandte Dichtkante (8) aufweist,
**wobei die Lüfterhaube derart wie ein auf einem Teller angeordneten Tasse ausgeformt ist, dass der Teller eben ausgeführt und an seinem Außenumfang quadratisch ist, wobei die Ecken des Quadrats gerundet ausgeführt sind,**
**und wobei der Tellerbereich (6) des Tellers benachbart zu den gerundeten Ecken des Quadrats jeweils eine Ausnehmung (20) aufweist, wobei an der jeweiligen Ausnehmung (20) eine Befestigungsschraube angeordnet ist, mit welcher der Tellerbereich (6) der Lüfterhaube an das Gehäuseteil (7) angeschraubt ist,**
**wobei mittig im Tellerbereich (6) ein Lüfterhaubengitter (1) ausgeführt ist,**
**wobei der tassenförmige Bereich durch den Luft-Umlenkbereich (3) gebildet ist und an seiner Innenseite die zum Lüfter (4) gerichtete hervorstehenden Dichtkante (8) aufweist,**
**wobei die Elastizität der befestigten Lüfterhaube in Tangentialrichtung größer ist als in Normalenrichtung, sodass** die Dichtkante (8) bei betragsmäßig die Bruchkraft unterschreitender Krafteinwirkung auf die am Gehäuseteil (7) befestigte Lüfterhaube einen nicht-verschwindenden Abstand zur Einhüllenden des Lüfters (4) aufweist,
**wobei der Abstand zwischen Dichtkante (8) und Lüfter (4) auch bei beliebig gerichteter, betragsmäßig die Bruchkraft unterschreitender Krafteinwirkung kleiner als 4 Millimeter, insbesondere kleiner als 2 Millimeter oder gar ein Millimeter, beträgt,**
**wobei die Elastizität der befestigten Lüfterhaube in Tangentialrichtung größer ist als in Normalenrichtung, wobei die Tangentialrichtung in der Tangentialebene der Einhüllenden an einem Oberflächenpunkt der Einhüllenden enthalten ist und/oder parallel zu dieser ausgerichtet ist, der zur Dichtkante (8) den geringsten Abstand aufweist.**

2. Lüfteranordnung nach mindestens einem der vorangegangenen Ansprüche,
**dadurch gekennzeichnet, dass**
**bei Einwirken einer in Achsrichtung auf den Tellerbereich(6) der Lüfterhaube wirkenden Axialkraft die Lüfterhaube elastisch verformt wird, wobei die Kante 8 auf einem Kreis, dessen Mittelpunkt im Auflagepunkt der Lüfterhaube auf dem Gehäuseteil (7) liegt, ausgelenkt wird.**

3. Lüfteranordnung nach mindestens einem der vorangegangenen Ansprüche,
**dadurch gekennzeichnet, dass**
die Krafteinwirkung nur eine elastische und/oder plastische Verformung der Lüfterhaube bewirkt,
und/oder dass die beliebige elastische Verformung eine in Kraftrichtung gerichtete Verformung ohne Überschreiten der Bruchgrenze mit oder ohne plastischen Verformungsanteil,
und/oder dass
die Einhüllende des Lüfters (4) der vom Lüfter (4) bei dessen Drehbewegung ausgefüllte Raumbereich ist,
und/oder dass
mittels des nicht-verschwindenden Abstands thermische, schwingungsbedingte und/oder fertigungsbedingte Abstandsveränderungen nicht zur Kollision mit dem Lüfter (4) führen, im vorgesehenen Betrieb der Lüfteranordnung.

4. Lüfteranordnung nach mindestens einem der vorangegangenen Ansprüche,
**dadurch gekennzeichnet, dass**
die Verbindunglinie zwischen Auflagepunkt und Dichtkante (8) in Normalenrichtung liegt oder zumindest einen Winkel von weniger als 45°, insbesondere weniger als 20°, mit ihr einschließt.

5. Lüfteranordnung nach mindestens einem der vorangegangenen Ansprüche,
**dadurch gekennzeichnet, dass**
der Lüfter (4) ein Radiallüfter, ein Diagonallüfter oder ein Axiallüfter ist.

6. Lüfteranordnung nach mindestens einem der vorangegangenen Ansprüche,
**dadurch gekennzeichnet, dass**
**die Lüfterhaube ein Lüfterhaubengitter (1) als Einlass für axial einströmende Luft aufweist,**
**insbesondere wobei das Lüfterhaubengitter (1) kreisförmig begrenzt ist.**

7. Lüfteranordnung nach mindestens einem der vorangegangenen Ansprüche,
**dadurch gekennzeichnet, dass**
die radial aus dem Lüfter (4) austretende Luftströmung an der Innenseite der Lüfterhaube in zwei axial entgegengesetzt gerichtete Luftströmungen aufgetrennt wird, wobei die Abdichtung denjenigen Luftstrom, welcher axial entgegengerichtet strömt zum in das Lüfterhaubengitter (1) eintretenden Luftstrom, abdichtet von diesem durch das Lüfterhaubengitter (1) eingetretenen Luftstrom,
und/oder dass ein schüsselförmiger Luft-Umlenkbereich (3) an der Lüfterhaube ausgebildet ist, der mit einem ebenen Teilbereich der Lüfterhaube verbunden ist, wobei der ebene Teilbereich das Lüfterhaubengitter (1) umrandet.

8. Lüfteranordnung nach mindestens einem der vorangegangenen Ansprüche,
**dadurch gekennzeichnet, dass**
die Lüfterhaube einen ebenen Teilbereich aufweist, der einen quadratischen Außenumfang aufweist, wobei die Ecken des Quadrats gerundet sind,
wobei im ebenen Teilbereich Ausnehmungen zur formschlüssigen Verbindung und/oder zur Schraubverbindung mit dem Gehäuseteil (7) angeordnet sind,
wobei jede Ausnehmung (20) einen größeren Abstand zum Lüfterhaubengitter (1) aufweist als derjenige Abstand, welcher der geringste Abstand zwischen Außenumfang und Lüftergitter ist.

9. Lüfteranordnung nach mindestens einem der vorangegangenen Ansprüche,
**dadurch gekennzeichnet, dass**
derjenige Oberflächenbereich der Lüfterhaube mit dem geringsten Abstand zum Lüfter (4) als Dichtkante (8) bezeichnet wird.

10. Elektromotor mit einer Lüfteranordnung nach mindestens einem der vorangegangenen Ansprüche,
wobei die Maschine einen Rotor und das Gehäuseteil (7) umfasst,
wobei der Rotor im Gehäuse gelagert ist,
wobei der Lüfter (4) am Rotor verbunden ist und von einer Lüfterhaube umgeben ist, die am Gehäuseteil (7) befestigt ist,
**dadurch gekennzeichnet, dass**
der Innendurchmesser der Lüfterhaube in axialer, zum Motor hin orientierten Richtung monoton zunimmt.

11. Elektrische Maschine nach mindestens einem der vorangegangenen Ansprüche,
**dadurch gekennzeichnet, dass**
die mittels der Dichtkante (8) bewirkte Abdichtung mittels einer Verdickung an der Lüfterhaube ausgebildet ist,
und/oder dass
**die mittels der Dichtkante (8) bewirkte Abdichtung als Fortsetzung eines Luft-Umlenkbereichs (3) der Lüfterhaube ausgebildet ist, insbesondere so dass die Lüfterhaube als Blechteil, insbesondere Stanz-Biegeteil, fertigbar ist,**
und/oder dass
der Abstand zwischen Dichtkante (8) und Lüfter (4) auch bei beliebig gerichteter, betragsmäßig die Bruchkraft unterschreitender Krafteinwirkung kleiner als 4 Millimeter, insbesondere kleiner als 2 Millimeter oder gar ein Millimeter, beträgt.

12. Elektrische Maschine nach mindestens einem der vorangegangenen Ansprüche,
**dadurch gekennzeichnet, dass**
das Gehäuse ein Mittelstück umfasst, an dessen axialen Enden jeweils ein ebenfalls vom Gehäuse umfasstes Lagerschild zur Aufnahme der Lager des Rotors verbunden sind, wobei die Lüfterhaube an einem der Lagerschilde befestigt ist.

13. Elektrische Maschine nach mindestens einem der vorangegangenen Ansprüche,
**dadurch gekennzeichnet, dass**
die mittels der Dichtkante (8) bewirkte Abdichtung einstückig an der Lüfterhaube ausgeformt ist oder die mittels der Dichtkante (8) bewirkte Abdichtung mit der Lüfterhaube fest verbunden ist,
und/oder dass
die Lüfterhaube als Kunststoff-Spritzgussteil, als Blechteil oder als Gussteil ausgeführt ist.

14. Elektrische Maschine nach mindestens einem der vorangegangenen Ansprüche,
**dadurch gekennzeichnet, dass**
ein derart großer axialer Abstand zwischen Lüfterhaubengitter (1) und Lüfter (4) vorgesehen ist, dass bei einer elastischen Verformung des Lüfterhaubengitters (1) keine Berührung zum Lüfter (4) entsteht, insbesondere wobei der Abstand größer als 5 mm ist.

## Claims

1. A fan arrangement for an electric motor, comprising a fan (4) rotatably mounted on a part,
wherein the part is connected to a housing part (7) or is formed in one piece therewith, wherein a fan hood is fastened to the housing part (7) or is formed in one piece therewith,
wherein a contactless seal is provided between the fan (4) and the fan hood by means of an air gap, wherein the fan hood has a sealing edge (8) facing towards the fan (4),
wherein the fan hood is formed like a cup arranged on a saucer, such that the saucer is formed flat and is square on its outer periphery, the corners of the square being embodied rounded,
and wherein the saucer region (6) of the saucer has, adjacent to the rounded corners of the square, in each case a cutout (20), wherein a fastening screw is arranged at the respective cutout (20), with which screw the saucer region (6) of the fan hood is screwed on to the housing part (7),
wherein a fan hood grille (1) is formed centrally in the saucer region (6),
wherein the cup-shaped region is formed by the air-deflection region (3) and has on its inside the projecting sealing edge (8) which is directed towards the fan (4),
wherein the elasticity of the fastened fan hood in the tangential direction is greater than in the normal direction, so that the sealing edge (8), upon the application of a force which in terms of amount is less than the breaking force to the fan hood fastened to the housing part (7), has a non-vanishing distance from the envelope of the fan (4),
wherein the distance between the sealing edge (8) and the fan (4), even upon the application of a force directed in any direction whatsoever which in terms of amount is less than the breaking force, is less than 4 millimetres, in particular less than 2 millimetres, or even one millimetre,
wherein the elasticity of the fastened fan hood in the tangential direction is greater than in the normal direction, the tangential direction being contained in the tangential plane of the envelope at a surface point of the envelope and/or being oriented parallel thereto, which point has the least distance from the sealing edge (8).

2. A fan arrangement according to at least one of the preceding claims, **characterised in that**
upon the action of an axial force acting in the axial direction on the saucer region (6) of the fan hood, the fan hood is deformed elastically, the edge (8) being deflected on a circle, the centre point of which lies in the point of contact of the fan hood on the housing part (7).

3. A fan arrangement according to at least one of the preceding claims, **characterised in that**
the application of force brings about only an elastic and/or plastic deformation of the fan hood,
and/or **in that** the arbitrary elastic deformation [is] a deformation directed in the direction of force without exceeding the breaking point with or without a plastic deformation component,
and/or **in that**
the envelope of the fan (4) is the spatial region filled by the fan (4) upon the rotary movement thereof,
and/or **in that**
by means of the non-vanishing distance thermal changes in direction, or changes in direction due to vibration and/or manufacturing, do not result in a collision with the fan (4), in the intended operation of the fan arrangement.

4. A fan arrangement according to at least one of the preceding claims, **characterised in that**
the connecting line between the point of contact and the sealing edge (8) lies in the normal direction or encloses at least an angle of less than 45°, in particular less than 20°, therewith.

5. A fan arrangement according to at least one of the preceding claims, **characterised in that**
the fan (4) is a radial fan, a diagonal fan or an axial fan.

6. A fan arrangement according to at least one of the preceding claims, **characterised in that**
the fan hood has a fan hood grille (1) as an inlet for axially inflowing air,
in particular the fan hood grille (1) being circularly delimited.

7. A fan arrangement according to at least one of the preceding claims, **characterised in that**
the air flow emerging radially from the fan (4) on the inside of the fan hood is separated into two axially opposed air flows, the seal sealing off that air flow which flows axially in the opposite direction to the air flow entering into the fan hood grille (1) from this air flow which has entered through the fan hood grille (1),
and/or **in that** a dish-shaped air-deflection region (3) is formed on the fan hood, which region is connected to a flat partial region of the fan hood, the flat partial region bordering the fan hood grille (1).

8. A fan arrangement according to at least one of the preceding claims, **characterised in that**
the fan hood has a flat partial region which has a square outer periphery, the corners of the square being rounded,
cutouts for positive connection and/or for screw connection to the housing part (7) being arranged in the flat partial region,
each cutout (20) being at a greater distance from the fan hood grille (1) than that distance which is the least distance between the outer periphery and the fan grille.

9. A fan arrangement according to at least one of the preceding claims, **characterised in that**
that surface region of the fan hood with the least distance from the fan (4) is designated as the sealing edge (8).

10. An electric motor with a fan arrangement according to at least one of the preceding claims,
wherein the machine comprises a rotor and the housing part (7),
wherein the rotor is mounted in the housing,
wherein the fan (4) is connected to the rotor and is surrounded by a fan hood which is fastened to the housing part (7),
**characterised in that**
the internal diameter of the fan hood increases monotonically in the axial direction which is oriented towards the motor.

11. An electric machine according to at least one of the preceding claims, **characterised in that**
the sealing which is brought about by means of the sealing edge (8) is formed by means of a thickened section on the fan hood,
and/or **in that**
the sealing brought about by means of the sealing edge (8) is formed as the continuation of an air deflection region (3) of the fan hood, in particular so that the fan hood can be manufactured as a sheet-metal part, in particular a stamped and bent part,
and/or **in that**
the distance between the sealing edge (8) and the fan (4), even upon the application of a force directed in any direction whatsoever which in terms of amount is less than the breaking force, is less than 4 millimetres, in particular less than 2 millimetres, or even one millimetre.

12. An electric machine according to at least one of the preceding claims, **characterised in that**
the housing comprises a middle piece, on the axial ends of which in each case a bearing shield likewise encompassed by the housing to receive the bearing of the rotor are connected, the fan hood being fastened to one of the bearing shields.

13. An electric machine according to at least one of the preceding claims, **characterised in that**
the sealing brought about by means of the sealing edge (8) is formed in one piece on the fan hood, or the sealing brought about by means of the sealing edge (8) is fixedly connected to the fan hood,
and/or **in that**
the fan hood is formed as an injection-moulded plastics part, as a sheet-metal part or as a cast part.

14. An electric machine according to at least one of the preceding claims, **characterised in that**
such a large axial distance between the fan hood grille (1) and the fan (4) is provided that upon elastic deformation of the fan hood grille (1) no contact with the fan (4) occurs, in particular the distance being greater than 5 mm.

## Revendications

1. Ensemble à ventilateur destiné à un moteur électrique, comprenant un ventilateur (4) monté rotatif sur une pièce,
ladite pièce étant reliée à une partie (7) formant carter, ou étant réalisée d'un seul tenant avec cette dernière,
un capot de ventilateur étant fixé à ladite partie (7) formant carter, ou étant réalisé d'un seul tenant avec celle-ci,
un joint d'étanchement sans contact étant prévu entre le ventilateur (4) et le capot dudit ventilateur, au moyen d'un espace interstitiel, ledit capot du ventilateur comportant une arête d'étanchement (8) pointant en direction dudit ventilateur (4),
ledit capot du ventilateur étant configuré à la manière d'une tasse posée sur une soucoupe, de façon telle que ladite soucoupe présente une réalisation plane et une forme carrée sur son pourtour extérieur, les coins du carré étant de réalisation arrondie,
et la région aplatie (6) de ladite soucoupe étant pourvue d'un évidement (20) respectif, au voisinage des coins arrondis dudit carré, sachant qu'une vis de fixation, par laquelle ladite région aplatie (6) du capot du ventilateur est rapportée par vissage sur ladite partie (7) formant carter, est disposée au niveau de l'évidement (20) considéré,
une grille (1) du capot du ventilateur étant façonnée centralement dans ladite région aplatie (6),
sachant que la région en forme de tasse est matérialisée par la zone (3) déflectrice d'air et est munie, à sa face intérieure, de l'arête saillante d'étanchement (8) dirigée vers ledit ventilateur (4),
l'élasticité dudit capot du ventilateur, à l'état fixé, étant plus grande dans la direction tangentielle que dans la direction normale, de telle sorte que, lorsque la grandeur d'une force agissant sur ledit capot du ventilateur, fixé à ladite partie (7) formant carter, excède négativement la force de rupture, ladite arête d'étanchement (8) se trouve à une distance non négligeable par rapport à l'enveloppante dudit ventilateur (4),
la distance, entre ladite arête d'étanchement (8) et ledit ventilateur (4), mesurant moins de 4 millimètres, notamment moins de 2 millimètres, voire même un millimètre également lorsque la force appliquée, quelle que soit sa direction, présente une grandeur qui excède négativement ladite force de rupture,
l'élasticité dudit capot du ventilateur, à l'état fixé, étant plus grande dans la direction tangentielle que dans la direction normale, sachant que, dans le plan tangentiel de l'enveloppante, ladite direction tangentielle est orientée parallèlement à ladite enveloppante et/ou est contenue en un point de la surface de cette dernière qui présente la distance minimale par rapport à ladite arête d'étanchement (8).

2. Ensemble à ventilateur selon au moins l'une des revendications précédentes, **caractérisé par le fait que**
le capot du ventilateur est déformé élastiquement lors de l'application d'une force axiale agissant, dans la direction axiale, sur la région aplatie (6) dudit capot du ventilateur, l'arête (8) étant déviée sur une circonférence dont le centre se situe au point de venue en contact dudit capot du ventilateur sur la partie (7) formant carter.

3. Ensemble à ventilateur selon au moins l'une des revendications précédentes, **caractérisé par le fait que**
l'application de force provoque uniquement une déformation élastique et/ou plastique du capot du ventilateur,
et/ou que
la déformation élastique d'ampleur quelconque est une déformation orientée dans la direction de la force, sans dépassement de la limite de rupture, avec ou sans part de déformation plastique,
et/ou que
l'enveloppante du ventilateur (4) est la zone de l'espace occupée par ledit ventilateur (4) au cours du mouvement rotatoire de ce dernier,
et/ou que,
du fait de la distance non négligeable, des variations d'espacement d'origine thermique, induites par des vibrations, et/ou liées à la fabrication, n'occasionnent aucune collision avec ledit ventilateur (4) lors du fonctionnement prévu dudit ensemble à ventilateur.

4. Ensemble à ventilateur selon au moins l'une des revendications précédentes, **caractérisé par le fait que**
la ligne de jonction entre le point de venue en contact et l'arête d'étanchement (8) se situe dans la direction normale ou forme au moins, avec celle-ci, un angle inférieur à 45° et notamment inférieur à 20°.

5. Ensemble à ventilateur selon au moins l'une des revendications précédentes, **caractérisé par le fait que**
le ventilateur (4) est un ventilateur radial, un ventilateur diagonal ou un ventilateur axial.

6. Ensemble à ventilateur selon au moins l'une des revendications précédentes, **caractérisé par le fait que**
le capot du ventilateur comporte une grille (1) agissant comme une admission dévolue à de l'air affluant dans le sens axial,
sachant notamment que ladite grille (1) dudit capot du ventilateur présente une délimitation circulaire.

7. Ensemble à ventilateur selon au moins l'une des revendications précédentes, **caractérisé par le fait que**
l'écoulement d'air sortant radialement du ventilateur (4) est scindé, à la face intérieure du capot dudit ventilateur, en deux écoulements d'air dirigés axialement à l'opposé l'un de l'autre, le système d'étanchement assurant alors l'étanchéité du flux d'air, circulant axialement à l'opposé du flux d'air qui pénètre dans la grille (1) du capot dudit ventilateur, vis-à-vis de ce flux d'air ayant pénétré à travers ladite grille (1) du capot du ventilateur, et/ou
qu'une zone (3) déflectrice d'air, configurée en une clé et ménagée sur ledit capot du ventilateur, est reliée à une région partielle plane dudit capot du ventilateur, ladite région partielle plane encadrant ladite grille (1) du capot dudit ventilateur.

8. Ensemble à ventilateur selon au moins l'une des revendications précédentes, **caractérisé par le fait que**
le capot du ventilateur présente une région partielle plane dotée d'un pourtour extérieur carré, les coins du carré étant arrondis,
des évidements étant pratiqués, dans ladite région partielle plane, en vue de la liaison par complémentarité de formes et/ou en vue de la solidarisation vissée avec la partie (7) formant carter,
chaque évidement (20) étant espacé, de la grille (1) dudit capot du ventilateur, d'une distance supérieure à la distance représentant la distance minimale entre le pourtour extérieur et la grille dudit ventilateur.

9. Ensemble à ventilateur selon au moins l'une des revendications précédentes, **caractérisé par le fait que**
la région de la surface du capot du ventilateur, qui présente la distance minimale par rapport audit ventilateur (4), est désignée par "arête d'étanchement (8)".

10. Moteur électrique équipé d'un ensemble à ventilateur conforme à au moins l'une des revendications précédentes,
la machine incluant un rotor et la partie (7) formant carter,
ledit rotor étant monté dans le carter,
le ventilateur (4) étant relié audit rotor, et étant entouré par un capot fixé à ladite partie (7) formant carter,
**caractérisé par le fait que**
le diamètre intérieur du capot du ventilateur croît, avec allure monotone, dans la direction axiale orientée vers ledit moteur.

11. Machine électrique selon au moins l'une des revendications précédentes, **caractérisée par le fait que**
le système d'étanchement, procuré au moyen de l'arête d'étanchement (8), est réalisé au moyen d'un renflement sur le capot du ventilateur,
et/ou que
ledit système d'étanchement, procuré au moyen de ladite arête d'étanchement (8), est réalisé en tant que prolongement d'une zone (3) déflectrice d'air sur ledit capot du ventilateur, en particulier de façon telle que ledit capot du ventilateur puisse être produit sous la forme d'une pièce en tôle, notamment d'une pièce découpée et pliée,
et/ou que
la distance entre ladite arête d'étanchement (8) et ledit ventilateur (4) mesure moins de 4 millimètres, notamment moins de 2 millimètres, voire même un millimètre également lorsque la force appliquée, quelle que soit sa direction, présente une grandeur qui excède négativement la force de rupture.

12. Machine électrique selon au moins l'une des revendications précédentes, **caractérisée par le fait que**
le carter inclut une pièce centrale aux extrémités axiales de laquelle est rattaché, à chaque fois, un bouclier de palier faisant pareillement partie intégrante dudit carter, en vue de recevoir les paliers du rotor, le capot du ventilateur étant fixé à l'un des boucliers de paliers.

13. Machine électrique selon au moins l'une des revendications précédentes, **caractérisée par le fait que**
le système d'étanchement, procuré au moyen de l'arête d'étanchement (8), est formé d'un seul tenant avec le capot du ventilateur, ou bien ledit système d'étanchement, procuré au moyen de ladite arête d'étanchement (8), est relié rigidement audit capot du ventilateur, et/ou que
ledit capot du ventilateur est réalisé sous la forme d'une pièce en matière plastique moulée par injection, d'une pièce en tôle ou d'une pièce coulée.

14. Machine électrique selon au moins l'une des revendications précédentes, **caractérisée par le fait**
**qu'**il est prévu, entre la grille (1) du capot du ventilateur et ledit ventilateur (4), une grande distance axiale telle qu'aucun contact ne s'établisse, avec ledit ventilateur (4), lors d'une déformation élastique de ladite grille (1) du capot dudit ventilateur, ladite distance étant notamment supérieure à 5 mm.
